# EUROPEAN PATENT APPLICATION

(11) **EP 2 327 338 A1**
(43) Date of publication of application: **01.06.2011**
(21) Application number: 08809188.9
(22) Date of filing: 21.08.2008
(51) Int. Cl.: A47F 5/00, G06Q 50/00

(54) **ELECTRONIC SHELF LABEL SYSTEM, COMMUNICATION CONTROL DEVICE, RELAY STATION DEVICE, ELECTRONIC SHELF LABEL INFORMATION DISTRIBUTION METHOD, AND PROGRAM**

(71) Applicant: SII Data Service Corp., Chiba-shi, Chiba 261-8507 (JP)
(72) Inventor: OKABE, Akihiro, Chiba-shi Chiba 261-8507 (JP); ARAI, Isao, Chiba-shi Chiba 261-8507 (JP); KOBAYASHI, Yoshio, Chiba-shi Chiba 261-8507 (JP); SATO, Tatsuru, Chiba-shi Chiba 261-8507 (JP); AIHARA, Masahito, Chiba-shi Chiba 261-8507 (JP); TAKANO, Kaori, Chiba-shi Chiba 261-8507 (JP); KIKUCHI, Yoshiyuki, Chiba-shi Chiba 261-8507 (JP)
(74) Representative: Cloughley, Peter Andrew
(86) International application number: PCT/JP2008/064941
(87) International publication number: WO 2010/021050

(57) **Abstract**

Provided is an electronic shelf label system capable of shortening a period of time required in distributing a large amount of information such as update information for all electronic shelf labels. In the electronic shelf label system, a communication control device (200) distributes shelf label information for an electronic shelf label. A relay station device (300a, 300b) has an electronic shelf label allocated thereto as a relay destination of the shelf label information, and relays only a piece of the shelf label information for the electronic shelf label device that is allocated to the relay station device. The electronic shelf label receives the shelf label information relayed by the relay station device (300a, 300b), to thereby perform display based on the shelf label information.

## Description

### Technical Field

The present invention relates to an electronic shelf label system, a communication control device, a relay station device, an electronic shelf label information distribution method, and a program, and more particularly, to an electronic shelf label system, a communication control device, a relay station device, an electronic shelf label information distribution method, and a program which are used for distributing information to electronic shelf labels via a plurality of relay stations.

### Background Art

In a conventional electronic shelf label system, a large number of electronic shelf labels need to be installed in a large-scale store or the like, and hence for the purpose of simplifying installation of electronic shelf labels and achieving cost reduction, relay stations are installed in a plurality of spots in the store. The relay station receives information transmitted from a server, and distributes the received information to the electronic shelf labels by using low-power wireless communication such as infrared communication (Ir communication) (see, for example, Patent Document 1).

By thus performing the low-power wireless communication such as lr communication, that is, low-speed wireless communication only for reception, and performing seven-segment liquid crystal display that is only capable of numeric display, electric power necessary for the electronic shelf labels is reduced and long-term operation of the electronic shelf labels is accordingly enabled with a battery, which leads to easy management of the electronic shelf labels.

Meanwhile, in order to realize various kinds of display, there are also provided an electronic shelf label including a large-size liquid crystal screen capable of displaying an image, and an advertisement display device capable of displaying a moving image.
Patent Document 1: JP 2001-157625 A

### Disclosure of the Invention

### Problems to be solved by the Invention

However, in the electronic shelf label system, each of the relay stations receives information transmitted from the server toward the electronic shelf labels and relays the received information thereto, but the low-speed wireless communication used for the relay to the electronic shelf labels raises a problem that a long period of time is required in distributing a large amount of information such as update information for all the electronic shelf labels.

Further, when the low-speed wireless communication such as Ir communication is used for distributing information to the electronic shelf label including a large-size liquid crystal screen capable of displaying an image or the advertisement display device capable of displaying a moving image, an extremely long period of time is required for the distribution, which may lead to a fear of frequent failure occurrence in the distribution and the like. For that reason, it is difficult to integrate the large-sized electronic shelf label and the advertisement display device into the general electronic shelf label system. In a case of using those devices, a system capable of information distribution by using a high-speed communication scheme is constructed independently of the general electronic shelf label system, in general.

The present invention has been made in view of the above-mentioned circumstances, and it is therefore an object thereof to provide an electronic shelf label system, a communication control device, a relay station device, an electronic shelf label information distribution method, and a program which are capable of shortening a period of time required in distributing a large amount of information such as update information for all electronic shelf labels, regardless of types of the electronic shelf labels or the like.

### Means for solving the Problems

The present invention has been made in order to solve the above-mentioned problems, and the present invention provides an electronic shelf label system including: a communication control device for distributing shelf label information for an electronic shelf label device; a plurality of relay station devices each for relaying the shelf label information to the electronic shelf label device; and an electronic shelf label device for receiving the shelf label information relayed by the relay station device, to thereby perform display based on the shelf label information, in which the relay station device has the electronic shelf label device allocated thereto as a relay destination of the shelf label information, and relays only a piece of the shelf label information for the electronic shelf label device that is allocated to the relay station device.

Further, in the above-mentioned electronic shelf label system of the present invention, the communication control device includes: a transmission route storage section for storing, in association with each other, information for identifying the electronic shelf label device and information for identifying the relay station device having the electronic shelf label device allocated thereto; and a shelf label information distributing section for acquiring, when distributing shelf label information for one electronic shelf label device, from the transmission route storage section, information for identifying a relay station device having the one electronic shelf label device allocated thereto, and transmitting, to the relay station device identified by the acquired information, the shelf label information for the one electronic shelf label device.

Further, in the above-mentioned electronic shelf label system of the present invention, the transmission route storage section stores, in association with one another, information for identifying a communication scheme to be used for transmission to the electronic shelf label device, in addition to the information for identifying the electronic shelf label device and the information for identifying the relay station device, the shelf label information distributing section acquires, when distributing the shelf label information for the one electronic shelf label device, information for identifying a communication scheme to be used for transmission to the one electronic shelf label device, in addition to the information for identifying the relay station device, and transmits the acquired information for identifying the communication scheme along with the shelf label information for the one electronic shelf label device, and the relay station device includes a shelf label information relay section for receiving the transmitted shelf label information for the one electronic shelf label device and the transmitted information for identifying the communication scheme, and relaying the received shelf label information for the electronic shelf label device by using the communication scheme in accordance with the received information for identifying the communication scheme.

Further, any one of the above-mentioned electronic shelf label systems of the present invention further includes a handy terminal device for acquiring, from the electronic shelf label device, the information for identifying the electronic shelf label device, and transmitting, to the relay station device, the information for identifying the electronic shelf label device, the relay station device further includes a transmission destination receiving section for receiving, from the handy terminal device, the information for identifying the electronic shelf label device, and transmitting, to the communication control device, the information for identifying the electronic shelf label device along with the information for identifying the relay station device, and the communication control device further includes a transmission destination registering section for receiving the information for identifying the electronic shelf label device and the information for identifying the relay station device, and storing, in the transmission route storage section, the information for identifying the electronic shelf label device and the information for identifying the relay station device, in association with each other.

Further, in the above-mentioned electronic shelf label system of the present invention, the relay station device includes: a transmission destination storage section for storing information for identifying the electronic shelf label device that is allocated to the relay station device; and a shelf label information relay section for receiving and relaying, of the shelf label information for the electronic shelf label device that is distributed by the communication control device, only a piece of the shelf label information for the electronic shelf label device identified by the information that is stored in the transmission destination storage section.

Further, in the above-mentioned electronic shelf label system of the present invention, the transmission destination storage section stores information for identifying a communication scheme to be used for transmission to the electronic shelf label device, in association with the information for identifying the electronic shelf label device, and the shelf label information relay section uses, when relaying the shelf label information for the electronic shelf label device, the communication scheme identified by the information that is stored in the transmission destination storage section in association with the information for identifying the electronic shelf label device being a transmission destination of the shelf label information.

Further, any one of the above-mentioned electronic shelf label systems of the present invention further includes a handy terminal device for acquiring, from the electronic shelf label device, the information for identifying the electronic shelf label device, and transmitting, to the relay station device, the information for identifying the electronic shelf label device, and the relay station device further includes a transmission destination receiving section for receiving the information for identifying the electronic shelf label device, and storing the information in the transmission destination storage section.

Further, in any one of the above-mentioned electronic shelf label systems of the present invention, of the shelf label information received from an outside, the shelf label information relay section relays, to the electronic shelf label device identified by the information that is stored in the transmission destination storage section, the shelf label information for the electronic shelf label device, and transmits other shelf label information to another relay station device than the relay station device.

Further, the present invention provides a communication control device, which is used in an electronic shelf label system including: a communication control device for distributing shelf label information for an electronic shelf label device; a plurality of relay station devices each for relaying the shelf label information to the electronic shelf label device; and an electronic shelf label device for receiving the shelf label information relayed by the relay station device, to thereby perform display based on the shelf label information, the communication control device including: a transmission route storage section for storing, in association with each other, information for identifying the electronic shelf label device and information for identifying the relay station device having the electronic shelf label device allocated thereto; and a shelf label information distributing section for acquiring, when distributing shelf label information for one electronic shelf label device, from the transmission route storage section, information for identifying a relay station device having the one electronic shelf label device allocated thereto, and transmitting, to the relay station device identified by the acquired information, the shelf label information for the one electronic shelf label device.

Further, the present invention provides a relay station device, which is used in an electronic shelf label system including: a communication control device for distributing shelf label information for an electronic shelf label device; a plurality of relay station devices each for relaying the shelf label information to the electronic shelf label device; and an electronic shelf label device for receiving the shelf label information relayed by the relay station device, to thereby perform display based on the shelf label information, the relay station device including: a transmission destination storage section for storing information for identifying the electronic shelf label device that is allocated to the relay station device; and a shelf label information relay section for receiving and relaying, of the shelf label information for the electronic shelf label device that is distributed by the communication control device, only a piece of the shelf label information for the electronic shelf label device identified by the information that is stored in the transmission destination storage section.

Further, the present invention provides an electronic shelf label information distribution method for an electronic shelf label system including: a communication control device for distributing shelf label information for an electronic shelf label device; a plurality of relay station devices each for relaying the shelf label information to the electronic shelf label device; and an electronic shelf label device for receiving the shelf label information relayed by the relay station device, to thereby perform display based on the shelf label information, the electronic shelf label information distribution method including a process of relaying, by the relay station device, only a piece of the shelf label information for the electronic shelf label device that is allocated to the relay station device.

Further, the present invention provides a program, which is used in an electronic shelf label system including: a communication control device for distributing shelf label information for an electronic shelf label device; a plurality of relay station devices each for relaying the shelf label information to the electronic shelf label device; and an electronic shelf label device for receiving the shelf label information relayed by the relay station device, to thereby perform display based on the shelf label information, the program causing a computer of the communication control device to function as a shelf label information distributing section for acquiring, when distributing information for one electronic shelf label device, from a transmission route storage section, information for identifying a relay station device having the one electronic shelf label device allocated thereto, and transmitting, to the relay station device identified by the acquired information, the shelf label information for the one electronic shelf label device.

Further, the present invention provides a program, which is used in an electronic shelf label system including: a communication control device for distributing shelf label information for an electronic shelf label device; a plurality of relay station devices each for relaying the shelf label information to the electronic shelf label device; and an electronic shelf label device for receiving the shelf label information relayed by the relay station device, to thereby perform display based on the shelf label information, the program causing a computer of the relay station device to function as a shelf label information relay section for acquiring, from a transmission destination storage section, information for identifying the electronic shelf label device that is allocated to the relay station device, and receiving and relaying, of the shelf label information for the electronic shelf label device that is distributed by the communication control device, only a piece of the shelf label information for the electronic shelf label device identified by the acquired information.

### Effects of the Invention

According to the present invention, each of the relay station devices relays only a piece of the shelf label information for the electronic shelf label device that is allocated thereto, thereby being capable of shortening the period of time required in distributing a large amount of information such as update information for all the electronic shelf labels, regardless of the types of the electronic shelf label devices.

### Brief Description of the Drawings

[FIG. 1] A block diagram illustrating a configuration of an electronic shelf label system according to a first embodiment of the present invention.
[FIG. 2] A schematic block diagram illustrating configurations of a product master DB server 100, a communication control device 200, a relay station device 300a, and a handy terminal device 700 according to the above-mentioned embodiment.
[FIG. 3] A table illustrating an example of storage contents of a product master data storage section 110 according to the above-mentioned embodiment.
[FIG. 4] A table illustrating an example of storage contents of a shelf label information storage section 212 according to the above-mentioned embodiment.
[FIG. 5] A table illustrating an example of storage contents of a transmission route storage section 213 according to the above-mentioned embodiment.
[FIG. 6] A schematic block diagram illustrating a hardware configuration of the product master DB server 100 according to the above-mentioned embodiment.
[FIG. 7] A schematic block diagram illustrating a hardware configuration of the communication control device 200 according to the above-mentioned embodiment.
[FIG. 8] A schematic block diagram illustrating a hardware configuration of the relay station device 300a according to the above-mentioned embodiment.
[FIG. 9] A schematic block diagram illustrating a hardware configuration of the electronic shelf label 400a according to the above-mentioned embodiment.
[FIG. 10] A schematic block diagram illustrating a hardware configuration of a large-sized electronic shelf label 500 according to the above-mentioned embodiment.
[FIG. 11] A schematic block diagram illustrating a hardware configuration of an electronic shelf label with display 600 according to the above-mentioned embodiment.
[FIG. 12] A sequence diagram illustrating an operation of simultaneous distribution of shelf label information to all electronic shelf labels according to the above-mentioned embodiment.
[FIG. 13] A sequence diagram illustrating an operation performed at a time of registering information in the transmission route storage section 213 according to the above-mentioned embodiment.
[FIG. 14] A schematic block diagram illustrating a configuration of an electronic shelf label system according to a second embodiment of the present invention.
[FIG. 15] A schematic block diagram illustrating functional configurations of a product master DB server 100, a communication control device 800, a relay station device 900a, and a handy terminal device 700 according to the above-mentioned embodiment.
[FIGS. 16] Tables illustrating examples of storage contents of transmission destination storage sections 912 of relay station devices 900a and 900b according to the above-mentioned embodiment.
[FIG. 17] A sequence diagram illustrating an operation of simultaneous distribution of shelf label information to all electronic shelf labels according to the above-mentioned embodiment.
[FIG. 18] A sequence diagram illustrating an operation performed at a time of registering information in the transmission destination storage section 912 according to the above-mentioned embodiment.

### Description of Symbols

- 100: product master DB server
- 101, 201, 301: ROM
- 102, 202, 302: RAM
- 103, 203, 303, 404, 504, 604: control unit
- 104, 204, 304: storage unit
- 105, 205, 403, 503: display unit
- 106, 206: input unit
- 107, 207: communication unit
- 110: product master data storage section
- 200, 800: communication control device
- 210: shelf label information acquiring section
- 211, 811: shelf label information distributing section
- 212: shelf label information storage section
- 213: transmission route storage section
- 214: transmission destination registering section
- 300a, 300b, 900a, 900b: relay station device
- 305: infrared communication unit
- 306,502: low-speed communication unit
- 307, 602: high-speed communication unit
- 310, 910: shelf label information relay section
- 311, 911: transmission destination receiving section
- 400a, 400b: electronic shelf label
- 401, 501, 601: memory
- 402: infrared receiving unit
- 405: battery
- 500: large-sized electronic shelf label
- 600: electronic shelf label with display display unit
- 603: display unit
- 700: handy terminal device
- 710: shelf label identification acquiring section
- 912: transmission destination storage section

### Best Mode for carrying out the Invention

### (First embodiment)

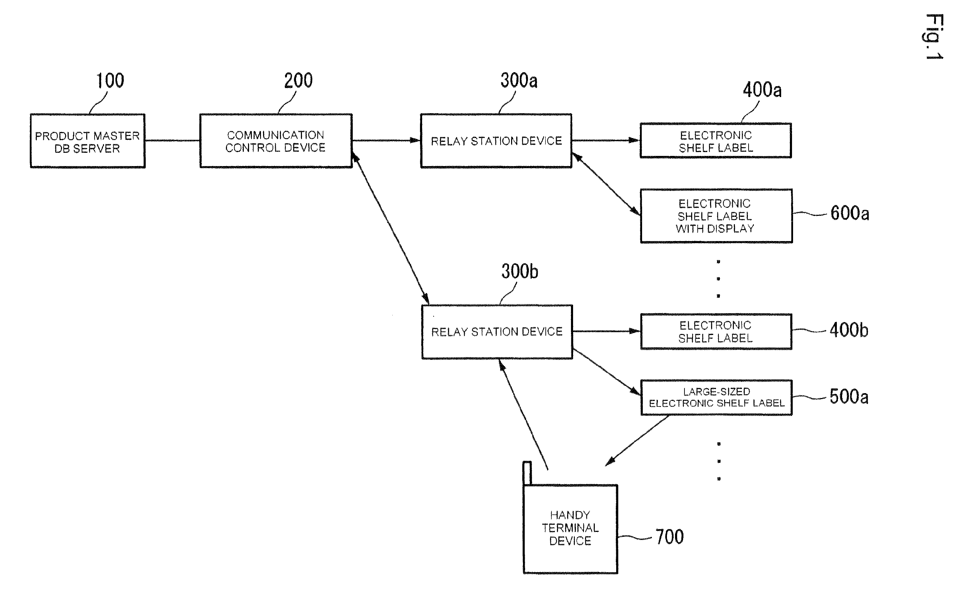

Hereinbelow, a first embodiment of the present invention is described with reference to the drawings. FIG. 1 is a schematic block diagram illustrating a configuration of an electronic shelf label system according to the first embodiment of the present invention. Reference numeral 100 represents a product master DB server for managing products for sale in a store where the electronic shelf label system is installed. Reference numeral 200 represents a communication control device for distributing shelf label information for an electronic shelf label, such as a price to be displayed on the electronic shelf label. Reference numerals 300a and 300b represent relay station devices installed in, for example, each sales floor, for relaying the shelf label information distributed from the communication control device 200 by using a communication scheme that allows the electronic shelf label to receive the shelf label information. Reference numerals 400a and 400b represent electronic shelf labels for receiving the shelf label information from the relay station devices 300a and 300b through Ir communication (infrared communication), respectively, to thereby display a price and the like as a character string based on the shelf label information containing text data. Reference numeral 500a represents a large-sized electronic shelf label for receiving the shelf label information from the relay station device 300b through low-power, low-speed wireless communication such as ZIGBEE (registered trademark), to thereby display a price and the like as an image based on the shelf label information containing image data. Reference numeral 600a represents an electronic shelf label with display for receiving the shelf label information from the relay station device 300a through high-speed wireless communication such as a wireless LAN, to thereby display a video of an advertisement and the like as a moving image based on the shelf label information containing moving image data. Reference numeral 700 represents a handy terminal device for acquiring identification information of the electronic shelf labels 400a and 400b, the large-sized electronic shelf label 500, and the electronic shelf label with display 600 by reading a barcode affixed to each of the electronic shelf labels, and for registering the identification information in the communication control device 200 via the relay station device 300a or 300b.

Hereinafter, the electronic shelf labels 400a and 400b, the large-sized electronic shelf label 500, and the electronic shelf label with display 600 are collectively referred to as electronic shelf label.

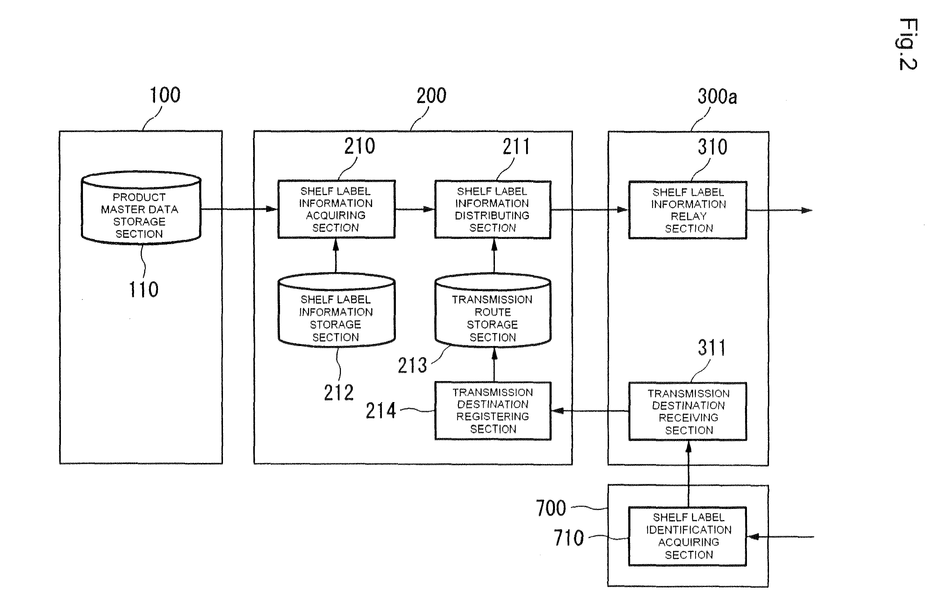

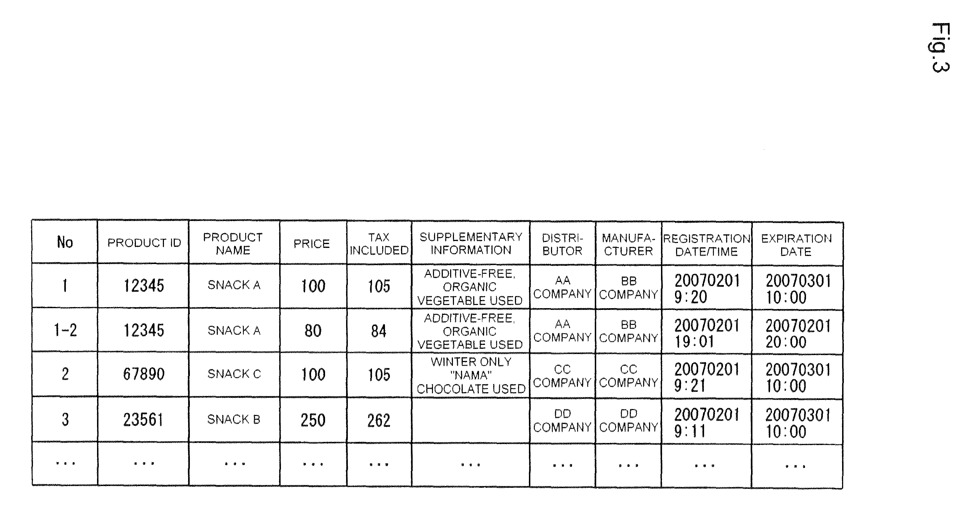

FIG. 2 is a schematic block diagram illustrating functional configurations of the product master DB server 100, the communication control device 200, the relay station device 300a, and the handy terminal device 700. Note that, the relay station device 300b has the same configuration as the relay station device 300a, and illustration and description thereof are therefore omitted herein. The product master DB server 100 includes a product master data storage section 110 for storing product-related information such as a price of a product for sale in the store where the electronic shelf label system is installed. Details of the product master data storage section 110 are described later with reference to FIG. 3.

The communication control device 200 includes a shelf label information acquiring section 210, a shelf label information distributing section 211, a shelf label information storage section 212, a transmission route storage section 213, and a transmission destination registering section 214. When receiving an operation instruction for simultaneous distribution of shelf label information to all the electronic shelf labels, the shelf label information acquiring section 210 refers to the shelf label information storage section 212 to acquire shelf label information for all the electronic shelf labels from the shelf label information storage section 212, or generates shelf label information based on information acquired from the product master data storage section 110. Then, the shelf label information acquiring section 210 outputs the shelf label information and information for identifying the shelf label (shelf label ID information) to the shelf label information distributing section 211. When receiving the shelf label information and the shelf label ID information, the shelf label information distributing section 211 acquires, from the transmission route storage section 213, information for identifying a relay station device having the electronic shelf label allocated thereto as a transmission destination of the shelf label information, and transmits the shelf label information and the shelf label ID information to the relay station device that is identified by the information thus acquired. At this time, the shelf label information distributing section 211 also acquires information indicating a communication scheme from the transmission route storage section 213, and transmits the information indicating a communication scheme to the relay station device along with the shelf label information.

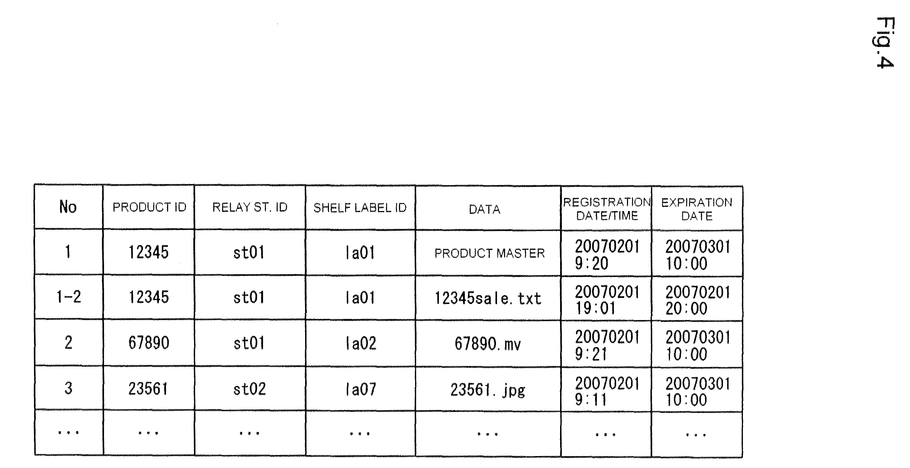

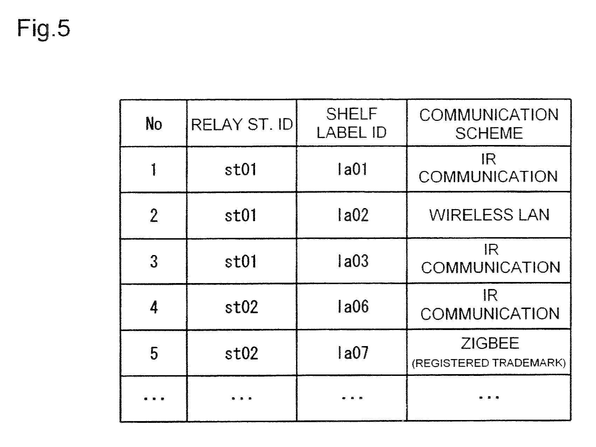

The shelf label information storage section 212 stores the shelf label information or the shelf label information generated by referring to the product master data storage section 110, in association with the shelf label ID information for identifying each electronic shelf label. Details of the shelf label information storage section 212 are described later with reference to FIG. 4. The transmission route storage section 213 stores, in association with one another, the shelf label ID information for identifying an electronic shelf label, relay st. ID information for identifying a relay station device having the electronic shelf label allocated thereto, and the information for identifying a communication scheme to be used for communication from the relay station device to the electronic shelf label. Details of the transmission route storage section 213 are described later with reference to FIG. 5. The transmission destination registering section 214 receives the shelf label ID information, the relay st. ID information, and the information indicating a communication scheme from each of the relay station devices 300a and 300b, and stores those kinds of information in the transmission route storage section 213.

The relay station device 300a includes a shelf label information relay section 310 and a transmission destination receiving section 311. The shelf label information relay section 310 receives the shelf label information, the shelf label ID information, and the information indicating a communication scheme, which are transmitted from the communication control device 200 to the relay station device, and relays the shelf label information to the electronic shelf label corresponding to the shelf label ID information by using the received communication scheme. The transmission destination receiving section 311 transmits, to the communication control device 200, the shelf label ID information received from the handy terminal device 700 along with the relay st. ID information of its relay station device and the information indicating a communication scheme that is specified by the operation instruction.

The handy terminal device 700 includes a shelf label identification acquiring section 710. The shelf label identification acquiring section 710 reads the barcode affixed to each electronic shelf label to acquire the shelf label ID information, and transmits, to the relay station device 300a or 300b, this shelf label ID information as well as the information indicating a communication scheme that is specified by the operation instruction from a user.

FIG. 3 is a table illustrating an example of storage contents of the product master data storage section 110 according to this embodiment. As exemplified in FIG. 3, the product master data storage section 110 stores, in association with one another, ten pieces of information in each record (each row of FIG. 3), namely, a "No.", a product ID, a product name, a price, a price including tax, supplementary information, a distributor, a manufacturer, a registration date/time, and an expiration date. In this table, the "No." is a number assigned to each record of the product master data storage section 110. The product ID is information for identifying a product. The registration date/time is a date and time when the record is registered. The expiration date is a date and time indicating a time limit until which information in the record is effective. The product master data storage section 110 may have a plurality of records for the same product. Specifically, the product master data storage section 110 may have a record for storing a normal price and a record for storing a price on sale, such as a record of No. "1" and a record of No. "1-2" exemplified in FIG. 3. In this case, the effective record has the largest subnumber in the "No." among records before the expiration dates thereof.

FIG. 4 is a table illustrating an example of storage contents of the shelf label information storage section 212 according to this embodiment. As exemplified in FIG. 4, the shelf label information storage section 212 stores, in association with one another, seven pieces of information in each record (each row of FIG. 4), namely, a "No.", a product ID, a relay st. ID, a shelf label ID, data, a registration date/time, and an expiration date. In this table, the relay st. ID is the relay st. ID information for identifying each of the relay station devices 300a and 300b, and the shelf label ID is the shelf label ID information for identifying each of the electronic shelf labels 400a and 400b, the large-sized electronic shelf label 500, and the electronic shelf label with display 600. The data stores a character string "product master" when the shelf label information is generated by referring to the product master data storage section 110, whereas the data stores a file name of the shelf label information (for example, "12345sale.txt") when the shelf label information is acquired from the shelf label information storage section 212.

FIG. 5 is a table illustrating an example of storage contents of the transmission route storage section 213 according to this embodiment. As exemplified in FIG. 5, the transmission route storage section 213 stores, in association with one another, four pieces of information in each record (each row of FIG. 5), namely, a "No.", a relay st. ID, a shelf label ID, and a communication scheme.

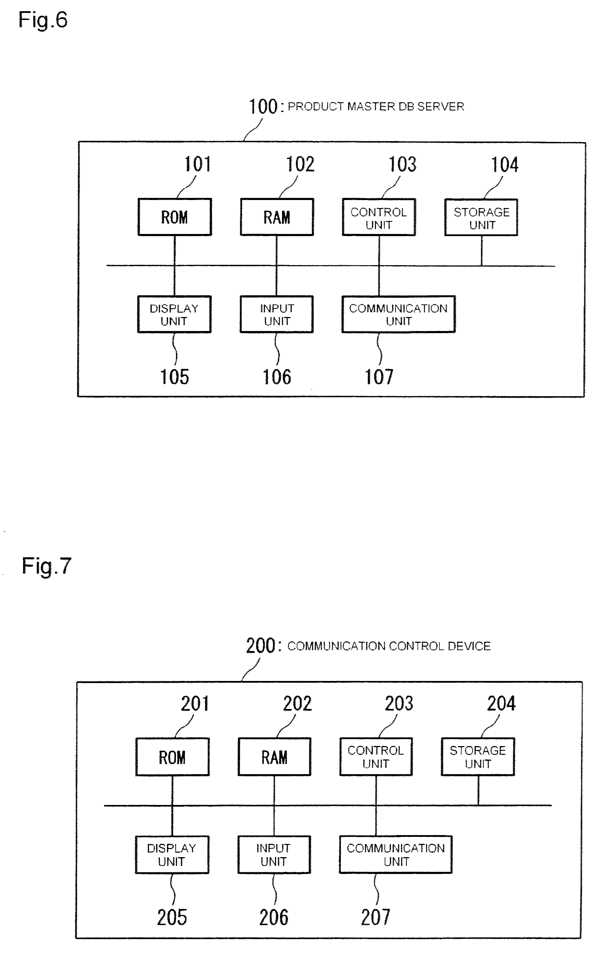

FIG. 6 is a schematic block diagram illustrating a hardware configuration of the product master DB server 100 according to this embodiment. The product master DB server 100 includes: a read only memory (ROM) 101; a random access memory (RAM) 102; a control unit 103 for controlling the entire product master DB server 100; a storage unit 104 for storing the product master data storage section 110 and a program for operating the control unit 103; a display unit 105 for displaying a screen of a liquid crystal display, a cathode ray tube (CRT), or the like; an input unit 106 such as a keyboard and a mouse; and a communication unit 107 for communicating with the communication control device 200, such as a local area network (LAN) or a wireless LAN. The control unit 103 operates according to the program stored in the storage unit 104, thereby enabling the product master DB server 100 to function as the product master data storage section 110 illustrated in FIG. 2.

FIG. 7 is a schematic block diagram illustrating a hardware configuration of the communication control device 200 according to this embodiment. The communication control device 200 includes: a ROM 201; a RAM 202; a control unit 203 for controlling the entire communication control device 200; a storage unit 204 for storing the shelf label information storage section 212, the transmission route storage section 213, and a program for operating the control unit 203; a display unit 205 for displaying a screen of a liquid crystal display, a CRT, or the like; an input unit 206 such as a keyboard and a mouse; and a communication unit 207 for communicating with the product master DB server 100 and the relay station devices 300a and 300b, such as a LAN or a wireless LAN. The control unit 203 operates according to the program stored in the storage unit 204, thereby enabling the communication control device 200 to function as the shelf label information acquiring section 210, the shelf label information distributing section 211, the shelf label information storage section 212, the transmission route storage section 213, and the transmission destination registering section 214 illustrated in FIG. 2.

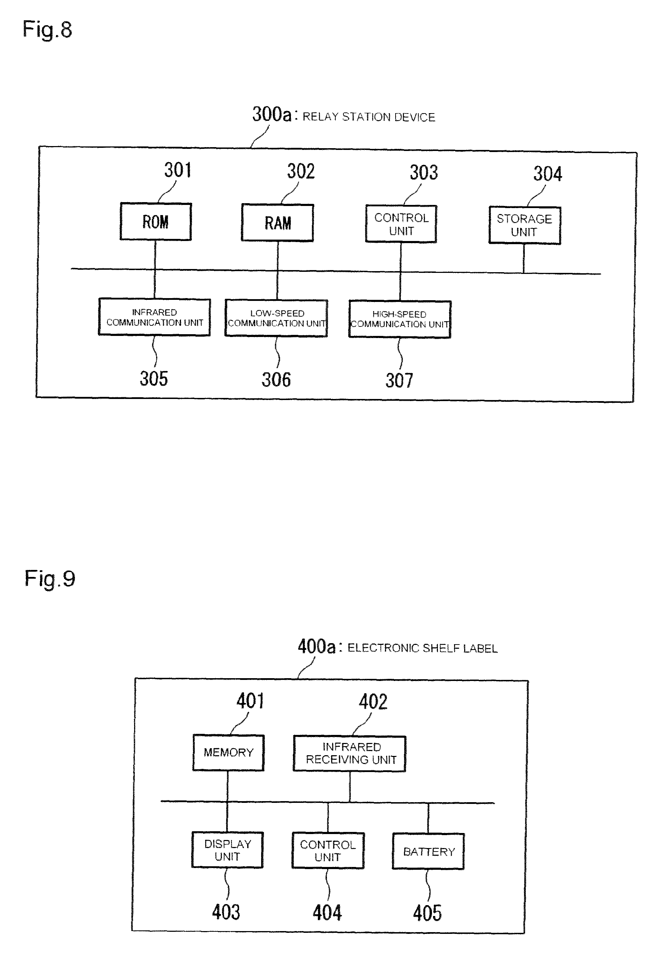

FIG. 8 is a schematic block diagram illustrating a hardware configuration of the relay station device 300a according to this embodiment. The relay station device 300b has the same hardware configuration as the relay station device 300a, and illustration and description thereof are therefore omitted herein. The relay station device 300a includes: a ROM 301; a RAM 302; a control unit 303 for controlling the entire relay station device 300a; a storage unit 304 for storing a program for operating the control unit 303; an infrared communication unit 305 for transmitting information to the electronic shelf label 400a or 400b by using Ir communication; a low-speed communication unit 306 for communicating with the large-sized electronic shelf label 500 by using ZIGBEE (registered trademark); and a high-speed communication unit 307 for communicating with the electronic shelf label with display 600 and the communication control device 200 by using a wireless LAN. The control unit 303 operates according to the program stored in the storage unit 304, thereby enabling the relay station device 300a to function as the shelf label information relay section 310 and the transmission destination receiving section 311 illustrated in FIG. 2.

FIG. 9 is a schematic block diagram illustrating a hardware configuration of the electronic shelf label 400a according to this embodiment. The electronic shelf label 400b has the same hardware configuration as the electronic shelf label 400a, and illustration and description thereof are therefore omitted herein. The electronic shelf label 400a includes: a memory 401 for storing a program for operating a control unit 404 and the received shelf label information; an infrared receiving unit 402 for receiving information transmitted from the relay station device 300a or 300b by using Ir communication; a display unit 403 that is provided with a seven-segment liquid crystal panel capable of displaying numerals; the control unit 404 for controlling the entire electronic shelf label 400a; and a battery 405 for supplying electric power to the hardware components of the electronic shelf label 400a. The control unit 404 operates according to the program stored in the memory 401, thereby enabling the electronic shelf label 400a to function as the electronic shelf label 400a for receiving the shelf label information containing text data to display a price as a character string on the display unit 403.

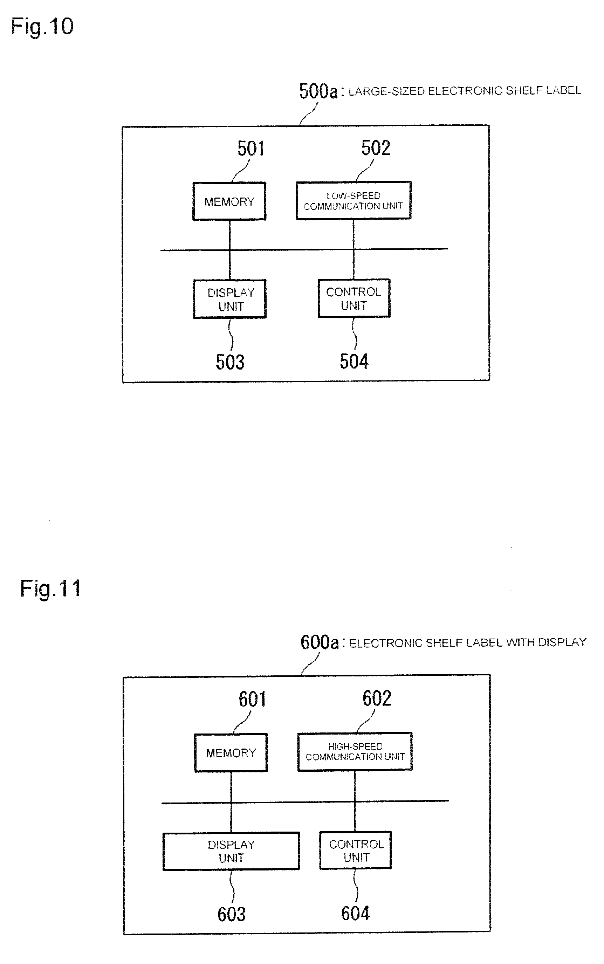

FIG. 10 is a schematic block diagram illustrating a hardware configuration of the large-sized electronic shelf label 500 according to this embodiment. The large-sized electronic shelf label 500 includes: a memory 501 for storing a program for operating a control unit 504 and the received shelf label information; a low-speed communication unit 502 for communicating with the relay station device 300a or 300b by using ZIGBEE (registered trademark); a display unit 503 that is provided with a liquid crystal panel capable of displaying an image; and the control unit 504 for controlling the entire large-sized electronic shelf label 500. The control unit 504 operates according to the program stored in the memory 501, thereby enabling the large-sized electronic shelf label 500 to function as the large-sized electronic shelf label 500 for receiving the shelf label information containing image data to display the shelf label information as an image on the display unit 503.

FIG. 11 is a schematic block diagram illustrating a hardware configuration of the electronic shelf label with display 600 according to this embodiment. The electronic shelf label with display 600 includes: a memory 601 for storing a program for operating a control unit 604 and the received shelf label information; a high-speed communication unit 602 for communicating with the relay station device 300a or 300b by using a wireless LAN; a display unit 603 that is provided with a liquid crystal panel capable of displaying a moving image; and the control unit 604 for controlling the entire electronic shelf label with display 600. The control unit 604 operates according to the program stored in the memory 601, thereby enabling the electronic shelf label with display 600 to function as the electronic shelf label with display 600 for receiving the shelf label information containing moving image data to display the shelf label information as a moving image on the display unit 603.

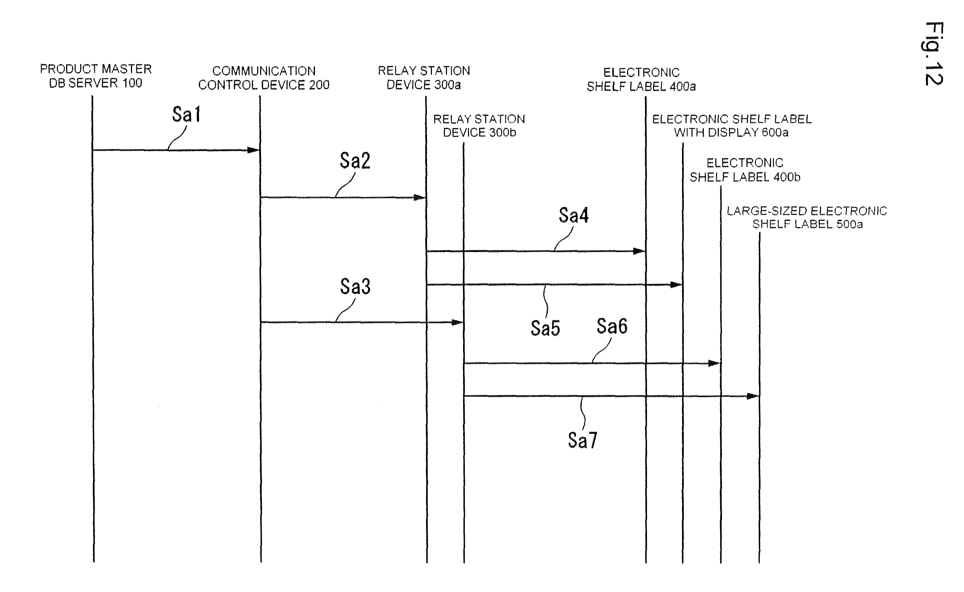

FIG. 12 is a sequence diagram illustrating an operation of simultaneous distribution of the shelf label information to all the electronic shelf labels according to this embodiment. The shelf label information acquiring section 210 of the communication control device 200 refers to the shelf label information storage section 212 to generate shelf label information for each of the electronic shelf labels (400a, 400b, 500, and 600). When the item of the data in the shelf label information storage section 212 is "product master" at this time, the shelf label information acquiring section 210 acquires information on a price including tax from the product master data storage section 110 of the product master DB server 100 (Sa1), and sets the acquired information as the shelf label information. When the item of the data is a file name (for example, "12345sale.txt" or "67890.mv"), on the other hand, the shelf label information acquiring section 210 acquires a file with that file name from the shelf label information storage section 212, and sets the acquired file as the shelf label information. The shelf label information acquiring section 210 outputs those kinds of shelf label information and the shelf label ID information for identifying the shelf label to the shelf label information distributing section 211.

Subsequently, when receiving those kinds of shelf label information and the shelf label ID information, based on the shelf label ID information, the shelf label information distributing section 211 acquires, from the transmission route storage section 213, relay st. ID information of a relay station device associated with the electronic shelf label being the transmission destination of each shelf label information, and the information indicating a communication scheme. Then, the shelf label information distributing section 211 transmits the each shelf label information along with the acquired information indicating a communication scheme, to the relay station device 300a or 300b indicated by the acquired relay st. ID information (Sa2 and Sa3).

Subsequently, when receiving the shelf label information, the shelf label ID information, and the information indicating a communication scheme, the shelf label information relay section 310 of each of the relay station devices 300a and 300b transmits the shelf label information to the electronic shelf label corresponding to the shelf label ID information by using the received communication scheme (Sa4, Sa5, Sa6, and Sa7).

In this manner, the transmission route storage section 213 of the communication control device 200 stores the allocation of the relay station devices 300a and 300b for the transmission to the electronic shelf labels, and when transmitting the shelf label information to the relay station devices 300a and 300b, based on the storage, the shelf label information distributing section 211 determines the relay station device for transmitting the shelf label information. Accordingly, each of the relay station devices 300a and 300b relays only a piece of the shelf label information to the electronic shelf label allocated thereto, with the result that processing loads on the relay station devices 300a and 300b can be reduced and the period of time required in distributing the shelf label information can be shortened.

Further, the transmission route storage section 213 stores the information indicating a communication scheme to be used for the transmission to each electronic shelf label, and the shelf label information relay section 310 of each of the relay station devices 300a and 300b selects the communication scheme based on the information to relay the shelf label information. Accordingly, even in a system including in a mixed manner electronic shelf labels using different data formats such as a text, an image, and a moving image, optimum communication schemes are used for the electronic shelf labels as in the operation in which the high-speed communication scheme such as a wireless LAN is used for an electronic shelf label using a large amount of data such as moving image data. As a result, the period of time required in distributing the shelf label information can be shortened.

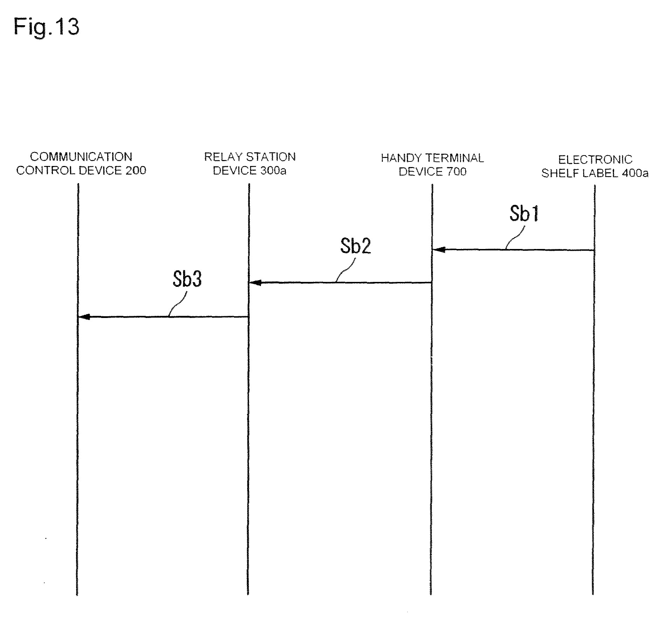

FIG. 13 is a sequence diagram illustrating an operation performed at a time of registering information in the transmission route storage section 213 according to this embodiment. First, the shelf label identification acquiring section 710 of the handy terminal device 700 follows a user's operation to read the barcode printed on a surface of the electronic shelf label 400a, to thereby acquire, for example, shelf label ID information "la01" of the electronic shelf label 400a (Sb1). Subsequently, the shelf label identification acquiring section 710 transmits information indicating a communication scheme "Ir communication" that is specified by the user's operation along with the shelf label ID information "Ia01" that is acquired beforehand (Sb2).

The information transmitted in Sequence Sb2 is received by the nearest relay station device, for example, the relay station device 300a. The transmission destination receiving section 311 of the relay station device 300a transmits, to the communication control device 200, relay st. ID information "st01" of its relay station device along with the received information indicating the communication scheme "Ir communication" and shelf label ID information "Ia01" (Sb3). When receiving the information indicating the communication scheme "Ir communication", the shelf label ID information "Ia01", and the relay st. ID information "st01" of the relay station device 300a, the communication control device 200 stores those kinds of information in the transmission route storage section 213 in association with one another.

### (Second embodiment)

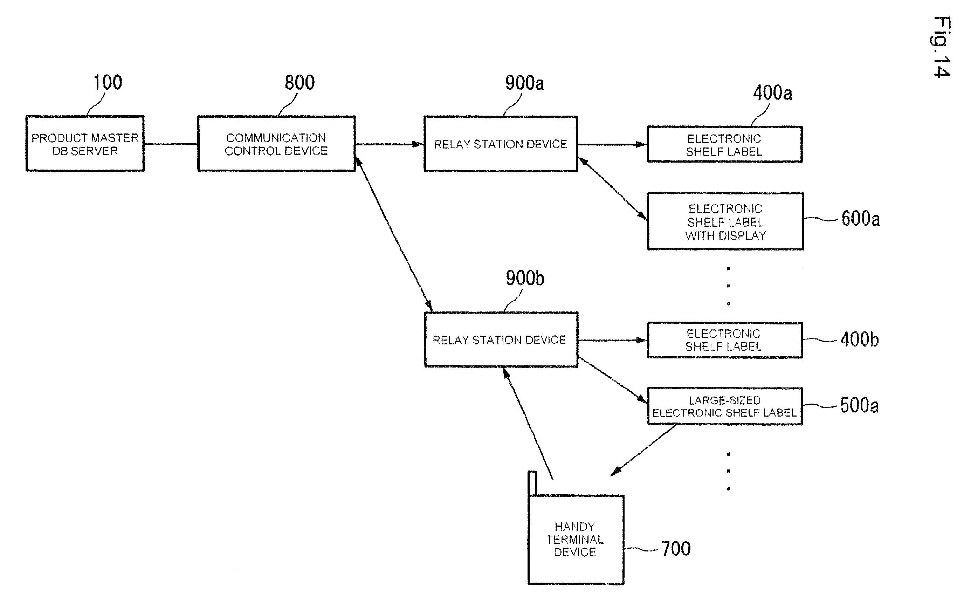

Hereinbelow, a second embodiment of the present invention is described with reference to the drawings. FIG. 14 is a schematic block diagram illustrating a configuration of an electronic shelf label system according to the second embodiment of the present invention. In FIG. 14, components corresponding to those of FIG. 1 are denoted by the same reference numerals and symbols, and description thereof is therefore omitted herein. Reference numeral 800 represents a communication control device for broadcasting, to each relay station device, shelf label information such as a price to be displayed on an electronic shelf label, and shelf label ID information thereof, to thereby distribute those kinds of information to the electronic shelf label. Reference numerals 900a and 900b each represent a relay station device for selecting shelf label information addressed to an electronic shelf label that is allocated thereto, from among the pieces of shelf label information and shelf label ID information broadcast from the communication control device 800, to thereby relay the shelf label information by using a communication scheme that allows the electronic shelf label to receive the shelf label information.

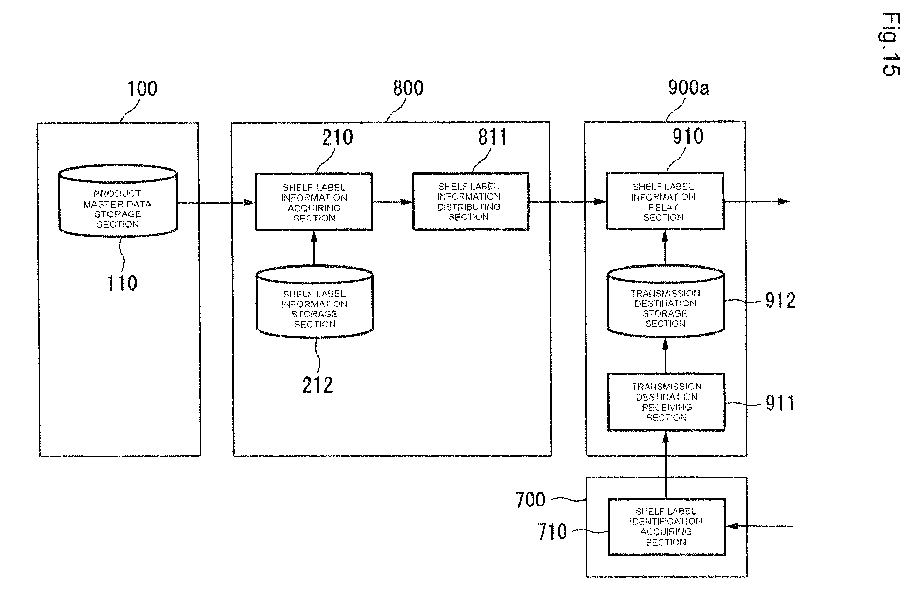

FIG. 15 is a schematic block diagram illustrating functional configurations of the product master DB server 100, the communication control device 800, the relay station device 900a, and the handy terminal device 700. Note that, the relay station device 900b has the same configuration as the relay station device 900a, and illustration and description thereof are therefore omitted herein. Further, in FIG. 15, components corresponding to those of FIG. 2 are denoted by the same reference numerals and symbols, and description thereof is therefore omitted herein. The communication control device 800 includes the shelf label information acquiring section 210, a shelf label information distributing section 811, and the shelf label information storage section 212. When receiving shelf label information and shelf label ID information from the shelf label information acquiring section 210, the shelf label information distributing section 811 broadcasts the shelf label information and the shelf label ID information to the relay station devices.

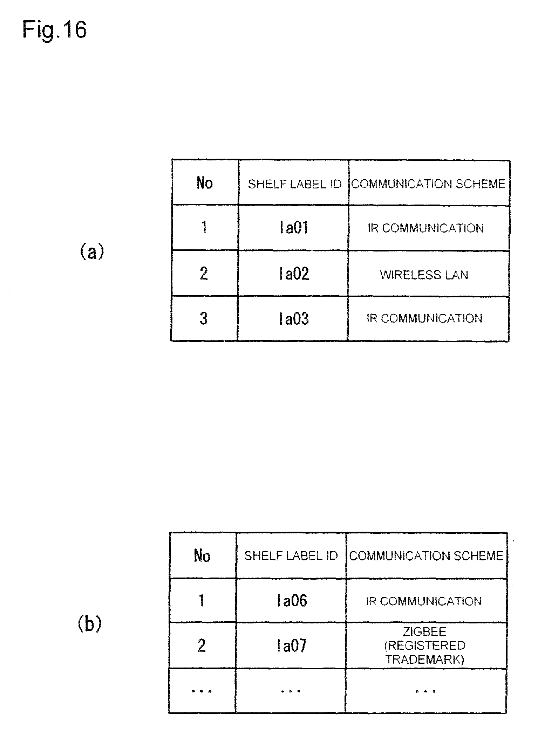

The relay station device 900a includes a shelf label information relay section 910, a transmission destination receiving section 911, and a transmission destination storage section 912. The shelf label information relay section 910 receives only a piece of shelf label information for an electronic shelf label indicated by shelf label ID information stored in the transmission destination storage section 912, from among the pieces of shelf label information and shelf label ID information broadcast from the communication control device 800, and relays the shelf label information to the electronic shelf label by using a communication scheme stored in the transmission destination storage section 912 in association with the shelf label ID information. The transmission destination storage section 912 stores, in association with each other, the shelf label ID information of the electronic shelf label that is allocated to its relay station device, and the communication scheme to be used for transmission to the electronic shelf label. Details of the transmission destination storage section 912 are described later with reference to FIGS. 16. The transmission destination receiving section 911 receives the shelf label ID information and the information indicating a communication scheme from the handy terminal device 700, and stores those kinds of information in the transmission destination storage section 912 in association with each other.

The product master DB server 100, the communication control device 800, the relay station devices 900a and 900b, the electronic shelf labels 400a and 400b, the large-sized electronic shelf label 500, and the electronic shelf label with display 600 of this embodiment have the same hardware configurations as the product master DB server 100, the communication control device 200, the relay station devices 300a and 300b, the electronic shelf labels 400a and 400b, the large-sized electronic shelf label 500, and the electronic shelf label with display 600 of the first embodiment, respectively, and description thereof is therefore omitted herein.

FIGS. 16(a) and 16(b) are tables illustrating examples of storage contents of the transmission destination storage sections 912 of the relay station devices 900a and 900b. As exemplified in FIGS. 16, each transmission destination storage section 912 stores, in association with one another, three pieces of information in each record (each row of FIGS. 16), namely, a "No.", a shelf label ID, and a communication scheme. When the transmission destination storage section 912 of the relay station device 900a stores pieces of shelf label ID information "Ia01 ", "Ia02", and "Ia03" as illustrated in FIG. 16(a), the transmission destination storage section 912 of the relay station device 900b stores pieces of shelf label ID information "Ia06", "Ia07", ... as illustrated in FIG. 16(b). Thus, the transmission destination storage section 912 of each relay station device stores information on the electronic shelf label that is allocated to its relay station device.

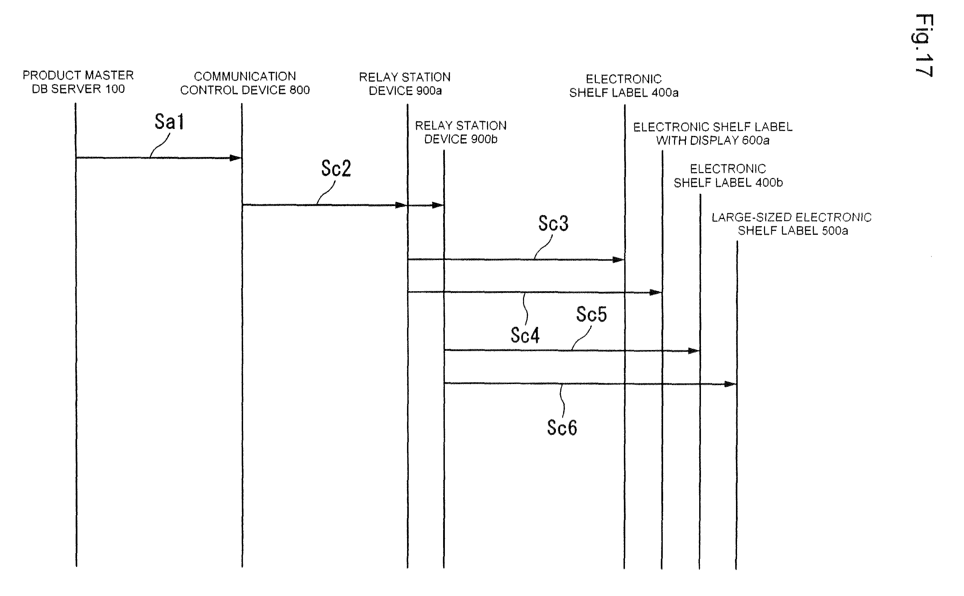

FIG. 17 is a sequence diagram illustrating an operation of simultaneous distribution of the shelf label information to all the electronic shelf labels according to this embodiment. Similarly to FIG. 12, the shelf label information acquiring section 210 of the communication control device 800 generates or acquires shelf label information (Sa1), and outputs the shelf label information and the shelf label ID information for identifying the shelf label to the shelf label information distributing section 811. Subsequently, when receiving the shelf label information and the shelf label ID information, the shelf label information distributing section 811 broadcasts the shelf label information and the shelf label ID information to the relay station devices 900a and 900b (Sc2). The shelf label information relay section 910 of each of the relay station devices 900a and 900b refers to the transmission destination storage section 912 to acquire the shelf label ID information of the electronic shelf label that is allocated to its relay station device. Then, the shelf label information relay section 910 receives only a piece of the shelf label information addressed to the electronic shelf label indicated by the acquired shelf label ID information, from among the pieces of shelf label information broadcast from the communication control device 800, and relays each shelf label information to each of the electronic shelf labels 400a and 400b, the large-sized electronic shelf label 500, and the electronic shelf label with display 600, by using the communication scheme stored in the transmission destination storage section 912 in association with the shelf label ID information (Sc3, Sc4, Sc5, and Sc6).

In this manner, the transmission destination storage section 912 of each of the relay station devices 900a and 900b stores the shelf label ID information of the electronic shelf label that is allocated to its relay station device, and when receiving the shelf label information and the shelf label ID information from the communication control device 800, based on the storage, the shelf label information relay section 910 receives and relays only a piece of the shelf label information addressed to the electronic shelf label that is allocated to its relay station device. As a result, processing loads on the relay station devices 900a and 900b can be reduced and the period of time required in distributing the shelf label information can be shortened.

Further, the transmission destination storage section 912 stores the information indicating a communication scheme to be used for the transmission to each electronic shelf label, and the shelf label information relay section 910 of each of the relay station devices 900a and 900b selects the communication scheme based on the information to relay the shelf label information. Accordingly, even in a system including in a mixed manner electronic shelf labels using different data formats such as a text, an image, and a moving image, optimum communication schemes are used for the electronic shelf labels as in the operation in which the high-speed communication scheme such as a wireless LAN is used for an electronic shelf label using a large amount of data such as moving image data. As a result, the period of time required in distributing the shelf label information can be shortened.

In this embodiment, each of the relay station devices 900a and 900b receives only a piece of the shelf label information with the shelf label ID information that is allocated to the relay station device, from among the pieces of shelf label information and shelf label ID information broadcast from the communication control device 800. Alternatively, each of the relay station devices 900a and 900b may also receive other information (shelf label information with shelf label ID information that is not allocated to the relay station device), and transmit the information to another relay station device than the relay station device. Specifically, from among the pieces of shelf label information and shelf label ID information received from the outside (communication control device 800 or the other one of the relay station devices 900a and 900b), the shelf label information relay section 910 may relay, to the electronic shelf label device or the like, the shelf label information with the shelf label ID information that is allocated to its relay station device and transmit, to, for example, another relay station device adjacent to its relay station device, the shelf label information with the shelf label ID information that is not allocated to its relay station device.

In a case where the electronic shelf label system of this embodiment is installed in a large-scale store or the like and the broadcast distribution is performed from the communication control device to the relay station devices through wireless communication, there is a fear that the shelf label information and the shelf label ID information cannot reliably be distributed to all the relay station devices in the store due to influences of the communication scheme and the layout of the store. In this case, the plurality of relay station devices arranged in the store each function as a relay device to transmit shelf label information and shelf label ID information irrelevant to the relay station device to another relay station device, which enables necessary information to be distributed over all the relay station devices.

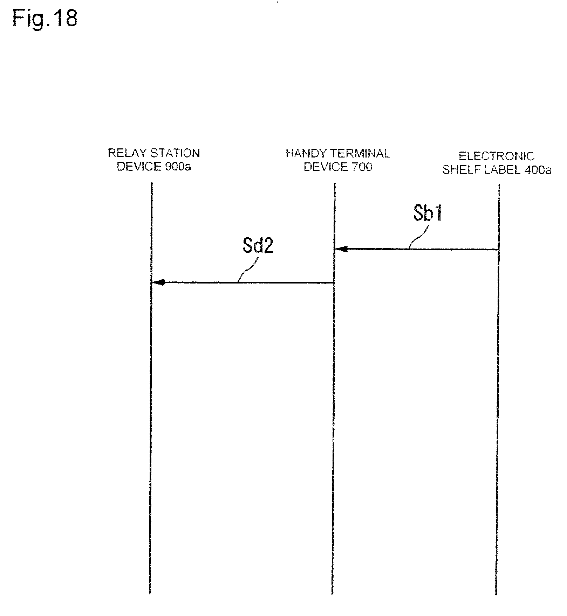

FIG. 18 is a sequence diagram illustrating an operation performed at a time of registering information in the transmission destination storage section 912 according to this embodiment. First, the shelf label identification acquiring section 710 of the handy terminal device 700 follows a user's operation to read the barcode printed on the surface of the electronic shelf label 400a, to thereby acquire, for example, the shelf label ID information "Ia01" of the electronic shelf label 400a (Sb1). Subsequently, the shelf label identification acquiring section 710 transmits information indicating a communication scheme that is specified by the user's operation, such as "Ir communication", along with the shelf label ID information "Ia01" that is acquired beforehand (Sd2).

The information transmitted in Sequence Sd2 is received by the nearest relay station device, for example, the relay station device 900a. The transmission destination receiving section 911 of the relay station device 900a stores, in the transmission destination storage section 912, the relay st. ID information "st01" of its relay station device along with the received information indicating the communication scheme "Ir communication" and shelf label ID information "Ia01", in association with one another.

The description has been given that the communication scheme to be used for the electronic shelf label is determined based on the information indicating a communication scheme that is stored in the transmission route storage section 213 in the first embodiment and in the transmission destination storage section 912 in the second embodiment. Instead of storing the information indicating a communication scheme in those storage sections, a data format of the shelf label information may be determined based on a file name extension of the shelf label information or the like to determine the communication scheme based on the data format, or the communication scheme may be determined based on a data size of the shelf label information. For example, the following determination may be employed. When the extension is "txt", it is inferred that the shelf label information is information on a product price or the like, and hence "Ir communication" is adopted assuming that the transmission is performed for a normal electronic shelf label. When the extension is "jpg", the shelf label information is image information, and hence "ZIGBEE (registered trademark)" is adopted. When the file size is equal to or larger than a predetermined value, a wireless LAN is adopted. The above-mentioned determination may eliminate the need to store the shelf label ID information and the information indicating a communication scheme.

The description has been given in the above-mentioned first and second embodiments that the handy terminal device 700 reads the shelf label ID information of the electronic shelf label by using a barcode reader, but the handy terminal device 700 may read a barcode of product ID information printed on the product main body or product ID information of the electronic shelf label, to thereby identify the corresponding shelf label ID information based on the storage contents of the shelf label information storage section 212. Alternatively, the handy terminal device 700 may acquire the shelf label ID information or the product ID information from the electronic shelf label through wireless communication using a radio frequency identity (RFID) tag or a noncontact IC card instead of the barcode.

Further, in the above-mentioned first and second embodiments, at the time of the simultaneous distribution of the shelf label information, each of the relay station devices 300a, 300b, 900a, and 900b may store at least information indicating a price, of the shelf label information to be relayed, and the handy terminal device 700 may follow the user's operation instruction to acquire the information indicating a price from the relay station device 300a and to display the information for confirmation. In this manner, the handy terminal device does not need to transmit, to the communication control device via the relay station device, a request to acquire information on the latest price, and can therefore acquire correct price information more quickly and reliably. Accordingly, the user can confirm that the electronic shelf label has received the shelf label information and displays a correct price. This is particularly effective in a case where the transmission side cannot confirm the receipt because of, for example, the electronic shelf labels 400a and 400b configured only for reception.

Further, in the above-mentioned first and second embodiments, in a case where the relay station devices 300a, 300b, 900a, and 900b relay the shelf label information to electronic shelf labels capable of two-way communication, such as the large-sized electronic shelf label 500 and the electronic shelf label with display 600, if a receipt response is not received, the shelf label information may be transferred to a relay station device that is preset in the relay station device and be relayed by that relay station device. In this manner, the risk of transmission failure is reduced in the case of transmitting a large amount of information in the system.

Further, in the above-mentioned first and second embodiments, the product master DB server 100 may store sales information in which product ID information, a date and time, unit sales, sale proceeds, and the like are associated with one another, inventory information in which product ID information, a date and time, a current stock, a service stock, and the like are associated with one another, and other such information in addition to the product master data storage section 110.

Note that, the storage unit 104 of FIG. 6, the storage unit 204 of FIG. 7, and the storage unit 304 of FIG. 8 are each constituted by a hard disk drive, a magneto-optical disk drive, a non-volatile memory such as a flash memory, a read-only storage medium such as a CR-ROM, a volatile memory such as a random access memory (RAM), or a combination thereof.

There may be recorded on a computer-readable recording medium a program for implementing the functions of the shelf label information acquiring section 210, the shelf label information distributing section 211, and the transmission destination registering section 214 of FIG. 2, the shelf label information relay section 310 and the transmission destination receiving section 311 of FIG. 2, the shelf label information acquiring section 210 and the shelf label information distributing section 811 of FIG. 15, or the shelf label information relay section 910 and the transmission destination receiving section 911 of FIG. 15. A computer system may read and execute the program recorded on the recording medium, to thereby perform those kinds of processing. Note that, the "computer system" herein includes an OS and hardware such as peripheral devices.

In a case where the "computer system" utilizes a WWW system, the "computer system" also includes a homepage providing environment (or display environment).

The "computer-readable recording medium" refers to a portable medium such as a flexible disk, a magneto-optical disk, a ROM, or a CD-ROM, or a storage device such as a hard disk integrated in the computer system. The "computer-readable recording medium" also includes a medium for dynamically holding a program for a short period of time, such as a communication line used for transmitting a program, including a network such as the Internet or a telephone line, and further includes a medium for holding a program for a given period of time, such as a volatile memory in a computer system serving as a server or a client in the case of using the above-mentioned communication line. The above-mentioned program may implement only part of the functions described above, or alternatively, may implement the functions described above in combination with a program that is already recorded in the computer system.

Hereinabove, the embodiments of the present invention have been described in detail with reference to the drawings, but the specific configuration is not limited to those embodiments, and the present invention also encompasses design that does not depart from the gist of the present invention.

### Industrial Applicability

The present invention is suitable for an electronic shelf label system that manages shelf labels for displaying prices of products displayed on shelving in the store, but is not limited thereto.

## Claims

1. An electronic shelf label system, comprising:
a communication control device for distributing shelf label information for an electronic shelf label device;
a plurality of relay station devices each for relaying the shelf label information to the electronic shelf label device; and
an electronic shelf label device for receiving the shelf label information relayed by the relay station device, to thereby perform display based on the shelf label information,
wherein the relay station device has the electronic shelf label device allocated thereto as a relay destination of the shelf label information, and relays only a piece of the shelf label information for the electronic shelf label device that is allocated to the relay station device.

2. An electronic shelf label system according to claim 1, wherein the communication control device comprises:
a transmission route storage section for storing, in association with each other, information for identifying the electronic shelf label device and information for identifying the relay station device having the electronic shelf label device allocated thereto; and
a shelf label information distributing section for acquiring, when distributing shelf label information for one electronic shelf label device, from the transmission route storage section, information for identifying a relay station device having the one electronic shelf label device allocated thereto, and transmitting, to the relay station device identified by the acquired information, the shelf label information for the one electronic shelf label device.

3. An electronic shelf label system according to claim 2,
wherein the transmission route storage section stores, in association with one another, information for identifying a communication scheme to be used for transmission to the electronic shelf label device, in addition to the information for identifying the electronic shelf label device and the information for identifying the relay station device,
wherein the shelf label information distributing section acquires, when distributing the shelf label information for the one electronic shelf label device, information for identifying a communication scheme to be used for transmission to the one electronic shelf label device, in addition to the information for identifying the relay station device, and transmits the acquired information for identifying the communication scheme along with the shelf label information for the one electronic shelf label device, and
wherein the relay station device comprises a shelf label information relay section for receiving the transmitted shelf label information for the one electronic shelf label device and the transmitted information for identifying the communication scheme, and relaying the received shelf label information for the electronic shelf label device by using the communication scheme in accordance with the received information for identifying the communication scheme.

4. An electronic shelf label system according to claim 2 or 3, further comprising a handy terminal device for acquiring, from the electronic shelf label device, the information for identifying the electronic shelf label device, and transmitting, to the relay station device, the information for identifying the electronic shelf label device,
wherein the relay station device further comprises a transmission destination receiving section for receiving, from the handy terminal device, the information for identifying the electronic shelf label device, and transmitting, to the communication control device, the information for identifying the electronic shelf label device along with the information for identifying the relay station device, and
wherein the communication control device further comprises a transmission destination registering section for receiving the information for identifying the electronic shelf label device and the information for identifying the relay station device, and storing, in the transmission route storage section, the information for identifying the electronic shelf label device and the information for identifying the relay station device, in association with each other.

5. An electronic shelf label system according to claim 1, wherein the relay station device comprises:
a transmission destination storage section for storing information for identifying the electronic shelf label device that is allocated to the relay station device; and
a shelf label information relay section for receiving and relaying, of the shelf label information for the electronic shelf label device that is distributed by the communication control device, only a piece of the shelf label information for the electronic shelf label device identified by the information that is stored in the transmission destination storage section.

6. An electronic shelf label system according to claim 5,
wherein the transmission destination storage section stores information for identifying a communication scheme to be used for transmission to the electronic shelf label device, in association with the information for identifying the electronic shelf label device, and
wherein the shelf label information relay section uses, when relaying the shelf label information for the electronic shelf label device, the communication scheme identified by the information that is stored in the transmission destination storage section in association with the information for identifying the electronic shelf label device being a transmission destination of the shelf label information.

7. An electronic shelf label system according to claim 5 or 6, further comprising a handy terminal device for acquiring, from the electronic shelf label device, the information for identifying the electronic shelf label device, and transmitting, to the relay station device, the information for identifying the electronic shelf label device,
wherein the relay station device further comprises a transmission destination receiving section for receiving the information for identifying the electronic shelf label device, and storing the information in the transmission destination storage section.

8. An electronic shelf label system according to any one of claims 5 to 7, wherein, of the shelf label information received from an outside, the shelf label information relay section relays, to the electronic shelf label device identified by the information that is stored in the transmission destination storage section, the shelf label information for the electronic shelf label device, and transmits other shelf label information to another relay station device than the relay station device.

9. A communication control device, which is used in an electronic shelf label system comprising:
a communication control device for distributing shelf label information for an electronic shelf label device;
a plurality of relay station devices each for relaying the shelf label information to the electronic shelf label device; and
an electronic shelf label device for receiving the shelf label information relayed by the relay station device, to thereby perform display based on the shelf label information,
the communication control device comprising:
a transmission route storage section for storing, in association with each other, information for identifying the electronic shelf label device and information for identifying the relay station device having the electronic shelf label device allocated thereto; and
a shelf label information distributing section for acquiring, when distributing shelf label information for one electronic shelf label device, from the transmission route storage section, information for identifying a relay station device having the one electronic shelf label device allocated thereto, and transmitting, to the relay station device identified by the acquired information, the shelf label information for the one electronic shelf label device.

10. A relay station device, which is used in an electronic shelf label system comprising:
a communication control device for distributing shelf label information for an electronic shelf label device;
a plurality of relay station devices each for relaying the shelf label information to the electronic shelf label device; and
an electronic shelf label device for receiving the shelf label information relayed by the relay station device, to thereby perform display based on the shelf label information,
the relay station device comprising:
a transmission destination storage section for storing information for identifying the electronic shelf label device that is allocated to the relay station device; and
a shelf label information relay section for receiving and relaying, of the shelf label information for the electronic shelf label device that is distributed by the communication control device, only a piece of the shelf label information for the electronic shelf label device identified by the information that is stored in the transmission destination storage section.

11. An electronic shelf label information distribution method for an electronic shelf label system comprising:
a communication control device for distributing shelf label information for an electronic shelf label device;
a plurality of relay station devices each for relaying the shelf label information to the electronic shelf label device; and
an electronic shelf label device for receiving the shelf label information relayed by the relay station device, to thereby perform display based on the shelf label information,
the electronic shelf label information distribution method comprising a process of relaying, by the relay station device, only a piece of the shelf label information for the electronic shelf label device that is allocated to the relay station device.

12. A program, which is used in an electronic shelf label system comprising:
a communication control device for distributing shelf label information for an electronic shelf label device;
a plurality of relay station devices each for relaying the shelf label information to the electronic shelf label device; and
an electronic shelf label device for receiving the shelf label information relayed by the relay station device, to thereby perform display based on the shelf label information,
the program causing a computer of the communication control device to function as a shelf label information distributing section for acquiring, when distributing information for one electronic shelf label device, from a transmission route storage section, information for identifying a relay station device having the one electronic shelf label device allocated thereto, and transmitting, to the relay station device identified by the acquired information, the shelf label information for the one electronic shelf label device.

13. A program, which is used in an electronic shelf label system comprising:
a communication control device for distributing shelf label information for an electronic shelf label device;
a plurality of relay station devices each for relaying the shelf label information to the electronic shelf label device; and
an electronic shelf label device for receiving the shelf label information relayed by the relay station device, to thereby perform display based on the shelf label information,
the program causing a computer of the relay station device to function as a shelf label information relay section for acquiring, from a transmission destination storage section, information for identifying the electronic shelf label device that is allocated to the relay station device, and receiving and relaying, of the shelf label information for the electronic shelf label device that is distributed by the communication control device, only a piece of the shelf label information for the electronic shelf label device identified by the acquired information.
